# EUROPEAN PATENT SPECIFICATION

(11) **EP 1 711 377 B1**
(45) Date of publication and mention of the grant of the patent: **14.03.2012**
(21) Application number: 05704636.9
(22) Date of filing: 14.01.2005
(51) Int. Cl.: B60R 19/48, B60D 1/14, B60D 1/56, B21D 19/10, B60D 1/52

(54) **Method of forming a reinforced hole in a bumper beam**
Verfahren zum Herstellen eines verstärkten Lochs in einem Stossfänger
Procédé de fabrication d'un trou renforcé dans un pare-choc

(30) Priority: 16.01.2004 NO 20040223
(43) Date of publication of application: 18.10.2006
(73) Proprietor: Benteler Automobiltechnik GmbH, 33102 Paderborn (DE)
(72) Inventor: SEIM, Sindre, N-0551 Oslo (NO); GAISNE, Denis, F-27370 Saint Ouen de Pontcheuil (FR)
(74) Representative: Ksoll, Peter
(86) International application number: PCT/NO2005/000020
(87) International publication number: WO 2005/068263

(56) References cited:
- EP-A1- 1 361 082
- DE-A1- 4 409 290
- DE-A1- 10 107 966
- DE-A1- 10 110 332
- JP-A- 8 232 944
- US-A1- 2001 052 706
- US-B1- 6 293 134
- US-B1- 6 604 884

## Description

The present invention relates to a method for making a hole in the wall of a bumper beam being an extruded profile.

It is formerly known to make holes in structural members by stamping, drilling or in any other way remove material from the sidewall of the profile. This method is also known for making holes in impact absorbing members or bumper beams. The holes are necessary for enabling the attachment of a towing hook in the beam.

Due to the pressure put on the towing hook in a towing operation, the towing hook will deflect laterally or vertically from its initial position. In many cases the towing hook will get in contact with the edge of the hole through which it is inserted. The surroundings must therefore support a high amount of stress without tearing up the walls through which the towing hook is entered.

Previously, holes for entering a towing hook has been enforced by increasing material thickness of the bumper beam sidewall. Alternatively, a reinforcement part have been manufactured separately and attached to the structural member in the designated area in which holes are made.

Both methods will lead to increased material consumption and thereby overall weight of the vehicle part. The use of an extra reinforcement part leads to a more complicated manufacturing process due to the extra part.

DE 44 09 290 A1 discloses in impact absorbing member or bumper beam provided with at least one sidewall in which a hole is made for introducing a towing hook into a means for accommodating a towing hook, wherein the hole is provided with integrated flanges.

US 6 293 134 B1 and closest prior art document US 2001/052706 A1 disclose a method for forming a hole in an impact absorbing member provided with at least one sidewall, wherein a tool is pressed through the sidewall of the member, thereby forming a hole provided with an integrated flange. The latter document further discloses providing a smaller hole before pressing the tool through the side wall.

JP 08 23 29 44 A discloses a tool for forming a flange in a hole of an automobile frame structure or other vehicle parts.

DE 101 10 332 A1 discloses that a vehicle has a towing eye fitted in the bumper by means of a fixed mounting and detachable mounting spaced away from the latter. The two mountings each consists of a through-opening which are constructed in a rear and a forward wall of the bumper's cross support.

EP 1 361 082 A1 discloses a tow nut for a vehicle bumper assembly having an engagement portion by which a tow eye may be connected thereto and an attachment portion by which the tow nut may be attached to the assembly, characterised in that the tow nut is provided, between the engagement and attachment portions, with a zone of weakness whereby relative movement between the engagement portion and the assembly is permitted, under an impact condition.

US 6,604,884 B1 discloses a front side frame that is disposed with one end portion in the axial direction butted against the side surface of a front bumper beam. A joint member is provided therebetween. The front bumper beam and the joint member are coupled by screwing nuts provided in the end plate part and coupling bolts. Clips with a nut are spring-engaged to either of coupling pieces of the joint member or the outer wall of the side frame. The front side frame and the joint member are coupled by coupling bolts by screwing.

DE 101 07 966 A1 discloses a further towing installation for a bumper beam of a vehicle. The bumper beam comprises a guiding part to support the towing hook.

The invention presents an improved method for making reinforced holes in a bumper beam. This is done by forming sidewall material into a hole provided with a flange.

The hole is made by pressing out the excessive material simultaneously with removing it from the sidewall, thereby forming a hole with an integrated flange. The excessive sidewall material will provide the hole with an integrated flange. The sidewall material is removed by pressing a rotating die onto and through the sidewall surface. The friction caused by the head of the rotating die will heat the wall material locally and make excessive material flow outwards as the rotating die is pressed through the side wall, simultaneously forming the hole and the integrated flanges.

The invention will now be an example further explained by means of figures where: Fig. 1 shows a section of a bumper beam with a towing hook and a hole of prior art, Fig. 2 shows a side view of a section of a bumper beam with a hole according to the present invention, Fig. 3 shows a cross sectional view of a towing hook arrangement according to the present invention, Figs. 4-7 show the method of making a towing hook hole according to the invention.

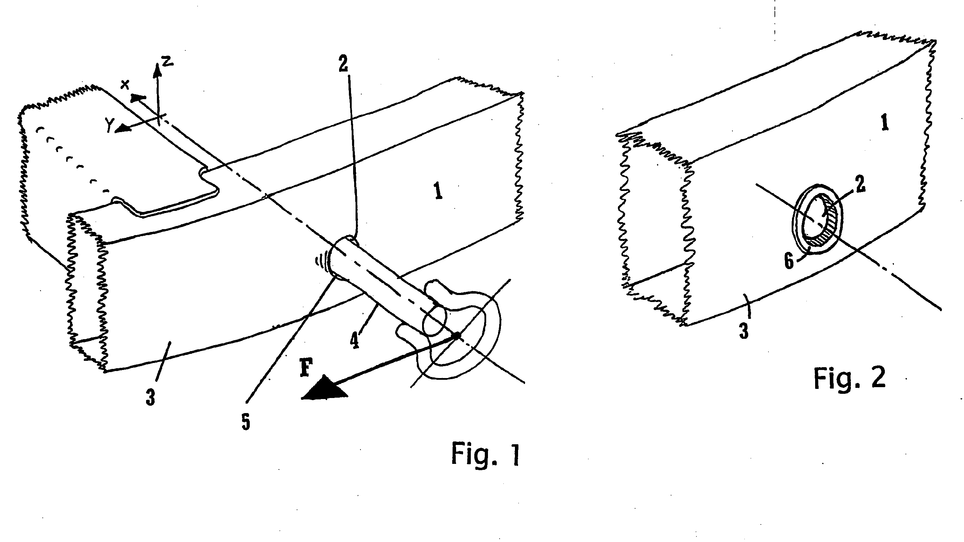

A bumper beam 1 of prior art is shown on Figure 1. A hole 2 is made in the bumper sidewall 3. A towing hook 4 is inserted through the hole 2 and attached inside or behind the bumper beam 1, on the neighbouring structure or elsewhere on the vehicle structure where it is found appropriate. A load is attached to the towing hook 4, normally from a vehicle being towed. As the towing vehicle and the towed vehicle are moving, the towing hook 4 will be forced in different directions putting a load on the hole edge 5 and thereby on the sidewall 3.

To avoid breakage of the hole 2, it is sometimes required to increase the dimensions of the sidewall 3 or add extra material as a flange member or the like to the hole 2. Fig. 2 shows a section of a bumper beam 1 according to the present invention. The hole 2 is made by displacing sidewall material thereby forming a hole. The material of the sidewall 3 being displaced will form a collar or flange 6 around the hole 2.

The flange 6 will have a strengthening effect on the hole 2, thereby enabling a decrease in sidewall thickness without compromising the technical requirements for the towing hook arrangement. As the flange 6 is an integrated part of the sidewall 3, the transition between the sidewall 3 and the flange 6 will be continuous thereby creating a stress flow with low stress concentrations from the towing hook through the hole 2 into the sidewall 3.

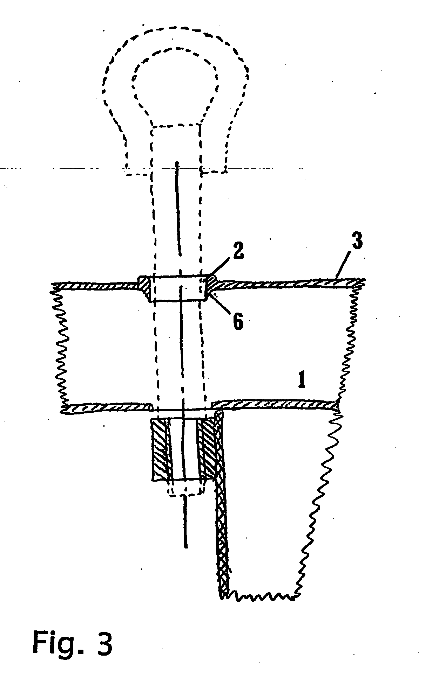

Figure 3 shows a cross sectional view of a towing hook arrangement with a hole 2 in the bumper sidewall 3 according to the present invention. A hole 2 provided with a flange 6 according to the invention is made in one of the sidewalls 3 of the bumper beam 1. The flange 6 forms a cylindrical shape in the hole 2.

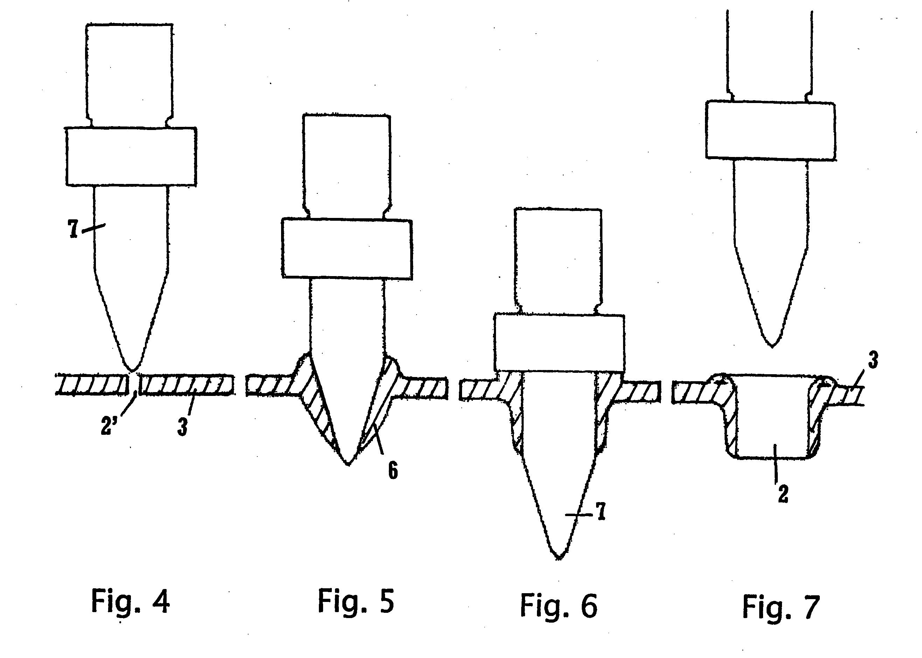

Figures 4-7 show a method for forming a hole 2 with an integrated flange 6. A hole 2'having a smaller dimension than the final hole 2 is punched in the sidewall 3. A revolving tool with a pointed head 7 is pressed down directly onto the hole 2'. As the head 7 revolves in the hole 2', the surrounding region of the sidewall 3 is heated by friction and will flow out, forming a collar or flange 6. The revolving head will thereby simultaneously form the hole and the surrounding flange.

The revolving head 7 is pressed down through the hole 2'increasing it until a hole 2 according to the invention is made in the side wall 3. The flange 6 will have a mainly cylindrical shape. The flange will normally be formed mainly perpendicular on the sidewall surface. By pressing the revolving tool onto the surface in a predefined angle, the flange will form a different integrated shape in the sidewall of the member.

As the flange and hole are made at a low temperature raise, the method will not cause any substantial heat affected zone around the hole and flange. However, the small temperature raise, causing the side wall material to flow, also leads to a method where little pressure is put on the side wall, thereby avoiding residual stress in the area surrounding the hole and flange.

A hole according to the present invention can be made in any wall and any section of the bumper beam where reinforcement is needed.

The invention is suited for forming a reinforced hole in an extruded profile of aluminium.

## Claims

1. Method for forming a reinforced hole (2) in a bumper beam (1) made from an extruded profile of aluminium the bumper beam (1) being provided with at least one sidewall (3), wherein
a tool is pressed through the sidewall (3) of the member, thereby forming the hole (2) provided with an integrated flange (6), wherein
- a hole (2') of a smaller dimension than the hole (2) to be formed is punched in the side wall (3) prior to forming the hole (2) with integrated flange (6), and wherein
- a revolving head (6) is pressed onto the sidewall (3) directly onto the hole (2') of smaller dimension thereby forming the hole (2) in the sidewall (3) whereby excessive material from the sidewall (3) will form the integrated flange (5) surrounding the hole (2).

## Patentansprüche

1. Verfahren zur Herstellung eines verstärkten Lochs (2) in einem aus einem extrudierten Aluminiumprofil hergestellten Stoßfängerträger (1), wobei der Stoßfängerträger (1) mit mindestens einer Seitenwand (3) versehen ist, wobei ein Werkzeug durch die Seitenwand (3) des Glieds gedrückt wird, wodurch das mit einem integrierten Flansch (6) versehene Loch (2) hergestellt wird, wobei
- ein Loch (2') mit einer kleineren Abmessung als das herzustellende Loch (2) in die Seitenwand (3) gestanzt wird, bevor das Loch (2) mit dem integrierten Flansch (6) hergestellt wird, und wobei
- ein Drehkopf (6) an die Seitenwand (3) direkt auf das eine kleinere Abmessung aufweisende Loch (2') gedrückt wird, wodurch das Loch (2) in der Seitenwand (3) hergestellt wird, wodurch das integrierte überschüssige Material von der Seitenwand (3) den das Loch (2) umgebenden Flansch (5) bilden wird.

## Revendications

1. Procédé de formation d'un trou renforcé (2) dans une poutre de pare-chocs (1) constituée d'un profilé extrudé en aluminium, la poutre de pare-chocs (1) étant munie d'au moins une paroi latérale (3), dans lequel
un outil est pressé à travers la paroi latérale (3) de l'élément, formant ainsi le trou (2) muni d'un rebord intégré (6), dans lequel
- un trou (2') de plus petite dimension que le trou (2) devant être formé est poinçonné dans la paroi latérale (3) avant la formation du trou (2) avec le rebord intégré (6), et dans lequel
- une tête rotative (6) est pressée sur la paroi latérale (3) directement sur le trou (2') de plus petite dimension, formant ainsi le trou (2) dans la paroi latérale (3), un matériau en excès de la paroi latérale (3) formant le rebord intégré (6) entourant le trou (2).
